# EUROPEAN PATENT APPLICATION

(11) **EP 4 554 153 A1**
(43) Date of publication of application: **14.05.2025**
(21) Application number: 22949847.2
(22) Date of filing: 07.07.2022
(51) Int. Cl.: H04L 27/00

(54) **MEASUREMENT METHOD AND APPARATUS, AND DEVICE AND READABLE STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Dehns Germany Partnerschaft mbB
(86) International application number: PCT/CN2022/104443
(87) International publication number: WO 2024/007263

(57) **Abstract**

The present disclosure is applied to the technical field of wireless communications. Provided are a measurement method and apparatus, and a device and a readable storage medium. The measurement method comprises: a user equipment receiving measurement configuration information sent by a network device, wherein the measurement configuration information comprises N measurement configurations, the N measurement configurations comprise M first measurement configurations and N-M second measurement gap (MG) configurations, the first measurement configurations are used for performing measurement on a first network, the second MG configurations are used for performing MG-based measurement on a second network, and the first network is a network to which the network device belongs; in response to the presence of a measurement conflict in the N measurement configurations, determining K MG configurations from among MG configurations in which a measurement conflict is present, wherein N, K and M are all integers greater than zero, N is greater than M, and N is greater than K; and not executing measurement corresponding to the K MG configurations, or modifying the K MG configurations and then performing measurement.

## Description

### TECHNICAL FIELD

The present disclosure relates to the field of wireless communication technology, and in particular, to a measurement method, an apparatus, a device, and a readable storage medium.

### BACKGROUND

Some user equipment (UE) may support a plurality of card slots to support a multi-universal subscriber identity module (Multi-SIM). The user equipment supporting the Multi-SIM may be connected to a plurality of different networks simultaneously. The user equipment may be classified into the following three types according to different communication capabilities: single TX/single RX, single TX/ dual RX, and dual TX/dual RX.

The user equipment supporting the Multi-SIM may simultaneously support two networks, for example, may simultaneously support a first network NW A and a second network NW B. The first network is a new radio (NR) network, and the second network is another NR network or a long term evolution (LTE) network. In addition, the user equipment supporting the Multi-SIM may simultaneously support the RRC connection of the two networks.

The research in Rel-17 is based on a terminal of single TX/single RX or single TX/ dual RX. Since there is only single TX capability, the terminal cannot maintain the RRC connection of two networks simultaneously. Therefore, the research scenario is that the NW A is in a connected state, and the NW B is in an idle state or inactive state. In the 3rd Generation Partner Project (3GPP), a measurement gap (MG) specifically used for Multi-SIM measurement purpose is introduced for measurement on the NW B. The NW A may be configured with at most two periodic MGs and one aperiodic MG simultaneously.

The research in Rel-18 is based on a terminal of dual TX/dual RX, which may support the RRC connection of NW A and NW B simultaneously. The measurement gap configuration scheme in this research scenario needs to be discussed.

### SUMMARY

According to the present disclosure, there is provided a measurement method, an apparatus, a device, and a readable storage medium.

According to a first aspect, there is provided a measurement method, performed by user equipment, and the method includes:
receiving measurement configuration information sent by a network device, where the measurement configuration information includes N sets of measurement configurations, the N sets of measurement configurations include M sets of first measurement configurations and N-M sets of second measurement gap (MG) configurations, the first measurement configurations are used for performing measurement on a first network, the second measurement gap (MG) configurations are used for performing measurement gap (MG)-based measurement on a second network, and the first network is a network to which the network device belongs;
determining, in response to presence of a measurement collision in the N sets of measurement configurations, K sets of measurement gap configurations from measurement gap configurations with a measurement collision, where N, K, and M are all integers greater than zero, N is greater than M, and N is greater than K; and
not performing measurement corresponding to the K sets of measurement gap configurations, or performing measurement after modifying the K sets of measurement gap configurations.

In some possible implementations, determining the K sets of measurement gap configurations from the measurement gap configurations with the measurement collision, includes:
determining, based on priorities of the measurement gap configurations with a measurement collision, the K sets of measurement gap configurations from the measurement gap configurations with the measurement collision, where priorities of the K sets of measurement gap configurations are lower than priorities of other measurement gap configurations other than the K sets of measurement gap configurations in the measurement gap configurations with the measurement collision.

In some possible implementations, the M sets of first measurement configurations include at least one set of third measurement gap (MG) configuration, the third measurement gap (MG) configuration is a legacy measurement gap configuration, and a measurement collision is present between the N-M sets of second measurement gap (MG) configurations and the at least one set of third measurement gap (MG) configuration; and
determining, based on the priorities of the measurement gap configurations with the measurement collision, the K sets of measurement gap configurations from the measurement gap configurations with the measurement collision, includes:
determining, based on priorities of the N-M sets of second measurement gap (MG) configurations and a priority of the at least one set of third measurement gap (MG) configuration, the K sets of measurement gap configurations as the N-M sets of second measurement gap configurations.

In some possible implementations, the method further includes:
determining, based on a technique specification, that the priorities of the N-M sets of second measurement gap (MG) configurations are lower than the priority of the at least one set of third measurement gap (MG) configuration;
   or,
receiving information used for indicating the priorities of the N-M sets of second measurement gap (MG) configurations and information used for indicating the priority of the at least one set of third measurement gap (MG) configuration sent by the network device.

In some possible implementations, the M sets of first measurement configurations include at least one set of fourth SMTC measurement configuration, and a measurement collision is present between the at least one set of fourth SMTC measurement configuration and the N-M sets of second measurement gap (MG) configurations; and
determining, based on the priorities of the measurement gap configurations with the measurement collision, the K sets of measurement gap configurations from the measurement gap configurations with the measurement collision, includes:
determining, based on a priority of the at least one set of fourth SMTC measurement configuration and priorities of the N-M sets of second measurement gap (MG) configurations, the K sets of measurement gap configurations as the N-M sets of second measurement gap configurations.

In some possible implementations, the method further includes:
determining, based on a technique specification, that the priorities of the N-M sets of second measurement gap (MG) configurations are lower than the priority of the at least one set of fourth SMTC measurement configuration;
   or,
receiving information used for indicating the priorities of the N-M sets of second measurement gap (MG) configurations and information used for indicating the priority of the at least one set of fourth SMTC measurement configuration sent by the network device.

In some possible implementations, the N-M sets of second measurement gap (MG) configurations include at least one set of aperiodic second measurement gap (MG) configuration and at least one set of periodic second measurement gap (MG) configuration, and a measurement collision is present between the at least one set of aperiodic second measurement gap (MG) configuration and the at least one set of periodic second measurement gap (MG) configuration.

In some possible implementations, determining the K sets of measurement gap configurations from the measurement gap configurations with the measurement collision, includes:
determining the K sets of measurement gap configurations as the at least one set of periodic second measurement gap (MG) configuration.

In some possible implementations, determining the K sets of measurement gap configurations from the measurement gap configurations with the measurement collision, includes:
determining, based on a priority of the at least one set of aperiodic second measurement gap (MG) configuration and a priority of the at least one set of periodic second measurement gap (MG) configuration, the K sets of measurement gap configurations as the at least one set of periodic second measurement gap (MG) configuration.

In some possible implementations, the method further includes:
determining, based on a technique specification, the priority of the at least one set of aperiodic second measurement gap (MG) configuration and the priority of the at least one set of periodic second measurement gap (MG) configuration;
   or,
receiving information used for indicating the priority of the at least one set of aperiodic second measurement gap (MG) configuration and information used for indicating the priority of the at least one set of periodic second measurement gap (MG) configuration sent by the network device.

In some possible implementations, the N-M sets of second measurement gap (MG) configurations include at least two sets of periodic second measurement gap (MG) configurations, and a measurement collision is present between the at least two sets of periodic second measurement gap (MG) configurations; and
determining, based on the priorities of the measurement gap configurations with the measurement collision, the K sets of measurement gap configurations from the measurement gap configurations with the measurement collision, includes:
determining, based on priorities of the at least two sets of periodic second measurement gap (MG) configurations, the K sets of measurement gap configurations as second measurement gap (MG) configurations with a lowest priority.

In some possible implementations, the method further includes:
determining, based on a technique specification, the priorities of the at least two sets of periodic second measurement gap (MG) configurations;
   or,
receiving information used for indicating the priorities of the at least two sets of periodic second measurement gap (MG) configurations sent by the network device.

**In** some possible implementations, modifying the K sets of measurement gap configurations includes increasing a measurement period in the K sets of measurement gap configurations.

According to a second aspect, there is provided a measurement method, performed by a network device, and the method includes:
sending measurement configuration information to user equipment, where the measurement configuration information includes N sets of measurement configurations, the N sets of measurement configurations include M sets of first measurement configurations and N-M sets of second measurement gap (MG) configurations, the first measurement configurations are used for performing measurement on a first network, the second measurement gap (MG) configurations are used for performing measurement gap (MG)-based measurement on a second network, and the first network is a network to which the network device belongs.

In some possible implementations, the method further includes:
sending information used for indicating a priority of each set of measurement configuration to the user equipment.

According to a third aspect, there is provided a measurement apparatus, configured in user equipment, and the apparatus includes:
a transceiver module, configured to receive measurement configuration information sent by a network device, where the measurement configuration information includes N sets of measurement configurations, the N sets of measurement configurations include M sets of first measurement configurations and N-M sets of second measurement gap (MG) configurations, the first measurement configurations are used for performing measurement on a first network, the second measurement gap (MG) configurations are used for performing measurement gap (MG)-based measurement on a second network, and the first network is a network to which the network device belongs; and
a processing module, configured to, in response to presence of a measurement collision in the N sets of measurement configurations, determine K sets of measurement gap configurations from measurement gap configurations with a measurement collision, where N, K, and M are all integers greater than zero, N is greater than M, N is greater than K, and the processing module is further configured to not perform measurement corresponding to the K sets of measurement gap configurations, or perform measurement after modifying the K sets of measurement gap configurations.

According to a fourth aspect, there is provided a measurement apparatus, configured in a network device, and the apparatus includes:
a transceiver module, configured to send measurement configuration information to user equipment, where the measurement configuration information includes N sets of measurement configurations, the N sets of measurement configurations include M sets of first measurement configurations and N-M sets of second measurement gap (MG) configurations, the first measurement configurations are used for performing measurement on a first network, the second measurement gap (MG) configurations are used for performing measurement gap (MG)-based measurement on a second network, and the first network is a network to which the network device belongs.

According to a fifth aspect, there is provided an electronic device, including a processor and a memory, where,
the memory is configured to store a computer program; and
the processor is configured to execute the computer program to implement the first aspect or any one of the possible designs in the first aspect.

According to a sixth aspect, there is provided a communication device, including a processor and a memory, where,
the memory is configured to store a computer program; and
the processor is configured to execute the computer program to implement the second aspect or any one of the possible designs in the second aspect.

According to a seventh aspect, there is provided a computer-readable storage medium, where an instruction is stored in the computer-readable storage medium, and when the instruction is invoked and executed on a computer, the computer is caused to perform the first aspect or any one of the possible designs in the first aspect.

According to an eighth aspect, there is provided a computer-readable storage medium is provided, where an instruction is stored in the computer-readable storage medium, and when the instruction is invoked and executed on a computer, the computer is caused to perform the second aspect or any one of the possible designs of the second aspect.

In the present disclosure, when the user equipment is configured with a plurality of sets of measurement configurations for different networks, and there is a measurement collision in the plurality of sets of measurement configurations, measurement corresponding to the partial measurement configurations in the measurement configurations with a measurement collision is not performed, or is performed after modification of the measurement configurations, so that there is no collision in the measurement process.

It is to be understood that both the foregoing general description and the following detailed description are exemplary and explanatory only and are not restrictive of the present disclosure.

### BRIEF DESCRIPTION OF THE DRAWINGS

The accompanying drawings described here are used to provide a further understanding of the embodiments of the present disclosure and constitute a part of the present disclosure. The illustrative examples of the embodiments of the present disclosure and the description of the embodiments of the present disclosure are used to explain the embodiments of the present disclosure, and do not constitute an improper limitation on the embodiments of the present disclosure. In the drawings:

The accompanying drawings here, which are incorporated in and constitute a part of the description, illustrate embodiments consistent with the embodiments of the present disclosure, and, together with the description, serve to explain the principles of the embodiments of the present disclosure.
FIG. 1 is a schematic architectural diagram of a wireless communication system provided according to an embodiment of the present disclosure;
FIG. 2 is a flowchart of a measurement method shown according to an example embodiment;
FIG. 3 is a flowchart of a measurement method shown according to an example embodiment;
FIG. 4 is a flowchart of a measurement method shown according to an example embodiment;
FIG. 5 is a flowchart of a measurement method shown according to an example embodiment;
FIG. 6 is a flowchart of a measurement method shown according to an example embodiment;
FIG. 7 is a flowchart of a measurement method shown according to an example embodiment;
FIG. 8 is a structural diagram of a measurement apparatus shown according to an example embodiment;
FIG. 9 is a structural diagram of a measurement apparatus shown according to an example embodiment;
FIG. 10 is a structural diagram of a measurement apparatus shown according to an example embodiment;
FIG. 11 is a structural diagram of a measurement apparatus shown according to an example embodiment.

### DETAILED DESCRIPTION

The embodiments of the present disclosure are further described with reference to the accompanying drawings and specific embodiments.

Example embodiments will now be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the embodiments of the present disclosure. By contrast, they are merely examples of apparatuses and methods consistent with some aspects of the present disclosure as detailed in the appended claims.

Terms used in the embodiments of the present disclosure are merely for the purpose of describing particular embodiments, and are not intended to limit the embodiments of the present disclosure. The singular forms "a" and "the" used in the embodiments of the present disclosure and the appended claims are also intended to include plural forms, unless the context clearly indicates other meanings. It should also be understood that the term "and/or" as used here refers to and includes any or all possible combinations of one or more associated listed items.

It should be understood that although the terms first, second, third, or the like, may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the words "if" and "in a case that" as used here may be interpreted as "at the time that..." or "when..." or "in response to determining...".

Embodiments of the present disclosure are described in detail below, and examples of the embodiments are shown in the accompanying drawings, in which the same or similar reference numerals refer to the same or similar elements throughout. The embodiments described below with reference to the drawings are examples, are intended to explain the present disclosure, and are not to be construed as limitations of the present disclosure.

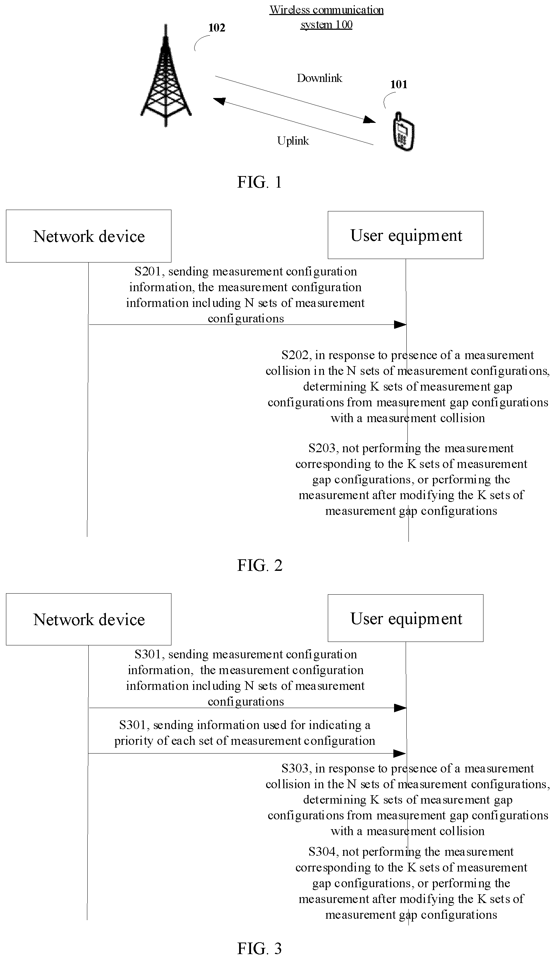

As shown in FIG. 1, the measurement method provided by the embodiments of the present disclosure may be applied to a wireless communication system 100, where the wireless communication system may include, but is not limited to, a network device 101 and user equipment 102. The user equipment 102 is configured to support carrier aggregation, and the user equipment 102 may be connected to a plurality of carrier units of the network device 101, including one primary carrier unit and one or more secondary carrier units.

It should be understood that the foregoing wireless communication system 100 may be both applied to a low-frequency scenario and a high-frequency scenario. The application scenario of the wireless communication system 100 includes, but is not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5-th generation (5G) system, a new radio (NR) communication system, or a future evolved public land mobile network (PLMN) system, or the like.

The user equipment 102 shown above may be user equipment (UE), a terminal, an access terminal, a terminal unit, a terminal station, a mobile station (MS), a remote station, a remote terminal, a mobile terminal, a wireless communication device, a terminal agent, a user device, or the like. The user equipment 102 may have a wireless transceiver function, and may perform communication (for example, wireless communication) with one or more network devices 101 of one or more communication systems, and receive a network service provided by the network device 101, where the network device 101 includes but is not limited to an illustrated base station.

Among them, the user equipment 102 may be a cellular telephone, a cordless telephone, a session initiation protocol (SIP) phone, a wireless local loop (WLL) station, a personal digital assistant (PDA) device, a handheld device having a wireless communication function, a computing device, or another processing device connected to a wireless modem, a vehicle-mounted device, a wearable device, user equipment in the future 5G network, or user equipment in the future evolved PLMN network, etc.

The network device 101 may be an access network device (or referred to as an access network station). Among them, the access network device refers to a device that provides a network access function, for example, a radio access network (RAN) base station, or the like. The network device may specifically include a base station (BS) device, or includes a base station device and a radio resource management device for controlling the base station device, or the like. The network device may further include a relay station (a relay device), an access point, a base station in the future 5G network, a base station in the future evolved PLMN network, an NR base station, or the like. The network device may be a wearable device or a vehicle-mounted device. The network device may alternatively be a communication chip having a communication module.

For example, the network device 101 includes, but is not limited to, a gnodeB (gNB) in 5G, an evolved node B (eNB) in the LTE system, a radio network controller (RNC), a nodeB (NB) in the WCDMA system, a wireless controller in the CRAN system, a base station controller (BSC), a base transceiver station (BTS) in the GSM or CDMA system, a home base stations (such as a home evolved nodeB, or a home nodeB, HNB), a baseband unit (BBU), a transmitting and receiving point (TRP), a transmitting point (TP) or a mobile switching center, etc.

According to embodiments of the present disclosure, there is provided a measurement method. FIG. 2 is a flowchart of a measurement method according to an example embodiment. As shown in FIG. 2, the method includes steps S201 to S203.

In step S201, a network device sends measurement configuration information to user equipment, where the measurement configuration information includes N sets of measurement configurations.

The N sets of measurement configurations include M sets of first measurement configurations and N-M sets of second measurement gap (MG) configurations, the first measurement configuration is used for performing measurement on a first network, the second measurement gap (MG) configuration is used for performing measurement gap (MG)-based measurement on a second network, and the first network is a network to which the network device belongs. N and M are both integers greater than zero, and N is greater than M.

The first measurement configuration may include a measurement gap (MG) configuration, or may include an SSB (Synchronzation Signal Block)-based RRM measurement timing configuration (SMTC), where a window corresponding to the SMTC is referred to as an SMTC window.

In step S202, in response to presence of a measurement collision in the N sets of measurement configurations, the user equipment determines K sets of measurement gap configurations from measurement gap configurations with a measurement collision.

In some possible implementations, the measurement collision refers to that the user equipment can only perform one measurement in the overlapping area of the measurement windows in different measurement configurations. Specifically, since the frequency point corresponding to the measurement gap (MG) configuration and the frequency point corresponding to the SMTC are different from each other, the measurement collision in the plurality of measurement configurations may include a measurement collision between the measurement gap (MG) configuration and the SMTC, and the user equipment can only perform measurement under one type of MG configuration at the same moment. The measurement collision in the plurality of measurement configurations may also include a collision between different measurement gap (MG) configurations.

In some possible implementations, in view of the general situation that it is considered that the first network is the primary network and the second network is the secondary network, the K sets of measurement gap configurations are determined as second measurement gap (MG) configurations for the second network included in the measurement gap configurations with a measurement collision. That is, when there is a measurement collision, the measurement configuration for the second network is discarded or modified.

In some possible implementations, in some use scenarios, it may be considered that the importance of the second network is higher than the importance of the first network, thus the K sets of measurement gap configurations are determined as all or part of the first measurement configurations for the first network included in the measurement gap configurations with a measurement collision. That is, when there is a measurement collision, the measurement configuration for the first network is discarded or modified.

In some possible implementations, priorities of different configurations are not determined by using a network as a granularity, and different configurations for different networks may correspond to different priorities. For example, the priorities of partial first measurement configurations in the M sets of first measurement configurations are higher than the priorities of partial second measurement gap (MG) configurations in the N-M sets of second measurement gap (MG) configurations. Meanwhile, the priorities of partial first measurement configurations in the M sets of first measurement configurations are lower than the priorities of partial second measurement gap (MG) configurations in the N-M sets of second measurement gap (MG) configurations. In this case, K sets of measurement gap configurations are determined according to priorities of different configurations. That is, when there is a measurement collision, a measurement configuration with a low priority is discarded or modified.

In step S203, the user equipment does not perform the measurement corresponding to the K sets of measurement gap configurations, or the user equipment performs the measurement after modifying the K sets of measurement gap configurations.

In some possible implementations, modifying the K sets of measurement gap configurations may refer to loosening the measurement requirements corresponding to the K sets of measurement gap configurations. For example, the measurement period in the K sets of measurement gap configurations is increased.

In some possible implementations, modifying the K sets of measurement gap configurations may also refer to tightening the measurement requirements corresponding to the K sets of measurement gap configurations. For example, the measurement period in the K sets of measurement gap configurations is reduced. In the embodiments of the present disclosure, when the user equipment is configured with a plurality of sets of measurement configurations for different networks, and there is a measurement collision in the plurality of sets of measurement configurations, measurement corresponding to the partial measurement configurations in the measurement configurations with a measurement collision is not performed, or is performed after modification of the configurations, so that there is no collision in the measurement process.

According to embodiments of the present disclosure, there is provided a measurement method. FIG. 3 is a flowchart of a measurement method according to an example embodiment. As shown in FIG. 3, the method includes steps S301 to S304.

In step S301, measurement configuration information is sent by a network device to user equipment, where the measurement configuration information includes N sets of measurement configurations.

The N sets of measurement configurations include M sets of first measurement configurations and N-M sets of second measurement gap (MG) configurations, the first measurement configuration is used for performing measurement on a first network, the second measurement gap (MG) configuration is used for performing measurement gap (MG)-based measurement on a second network, and the first network is a network to which the network device belongs. N and M are both integers greater than zero, and N is greater than M.

In step S302, the network device sends information used for indicating a priority of each set of measurement configuration to the user equipment.

In step S303, in response to presence of a measurement collision in the N sets of measurement configurations, the user equipment determines K sets of measurement gap configurations from measurement gap configurations with a measurement collision based on priorities of the measurement gap configurations with a measurement collision, where priorities of the K sets of measurement gap configurations are lower than priorities of other measurement gap configurations other than the K sets of measurement gap configurations in the measurement gap configurations with a measurement collision.

K is an integer greater than zero, and N is greater than K.

The description is made in detail below based on three different collision types.

The first type is that there is a collision between the second measurement gap (MG) configuration and the measurement gap (MG) configuration in the first measurement configuration.

In an example, the M sets of first measurement configurations include at least one set of third measurement gap (MG) configuration, the third measurement gap (MG) configuration is a legacy measurement gap configuration, and there is a measurement collision between the N-M sets of second measurement gap (MG) configurations and the at least one set of third measurement gap (MG) configuration.

In this case, a relationship between priorities of the N-M sets of second measurement gap (MG) configurations and a priority of the at least one set of third measurement gap (MG) configuration needs to be determined, and the measurement gap configurations with a low priority are determined as the K sets of measurement gap configurations. Among them, in view of the general situation that it is considered that the first network is the primary network and the second network is the secondary network, when setting the priority, the priority of the second measurement gap configuration is set to be lower than the priority of the third measurement gap (MG) configuration in the first measurement configuration.

Then, in step S303, determining the K sets of measurement gap configurations from measurement gap configurations with a measurement collision based on the priorities of the measurement gap configurations with a measurement collision, includes:
determining, based on priorities of the N-M sets of second measurement gap (MG) configurations and a priority of the at least one set of third measurement gap (MG) configuration, the K sets of measurement gap configurations as the N-M sets of second measurement gap configurations.

Among them, the manner of determining the priorities includes one of the following manners.

In manner 1, it is determined, based on a technique specification, that the priorities of the N-M sets of second measurement gap (MG) configurations are lower than the priority of the at least one set of third measurement gap (MG) configuration.

In manner 2, information used for indicating the priorities of the N-M sets of second measurement gap (MG) configurations and information used for indicating the priority of the at least one set of third measurement gap (MG) configuration sent by the network device are received.

Since the priorities of the N-M sets of second measurement gap (MG) configurations are lower than the priority of the at least one set of third measurement gap (MG) configuration, the K sets of measurement gap configurations are determined as the N-M sets of second measurement gap configurations.

The second type is that there is a collision between the second measurement gap (MG) configuration and the SMTC configuration in the first measurement configuration.

In an example, the M sets of first measurement configurations include at least one set of fourth SMTC measurement configuration, and there is a measurement collision between the at least one set of fourth SMTC measurement configuration and the N-M sets of second measurement gap (MG) configurations.

In this case, a relationship between a priority of the at least one set of fourth SMTC measurement configuration and priorities of the N-M sets of second measurement gap (MG) configurations needs to be determined, and measurement gap configurations with a low priority are determined as the K sets of measurement gap configurations. Among them, in view of the general situation that it is considered that the first network is the primary network and the second network is the secondary network, when setting the priority, the priorities of the N-M sets of second measurement gap configurations are set to be lower than the priority of the fourth measurement gap (MG) configuration in the first measurement configuration.

Then, in step S303, determining the K sets of measurement gap configurations from the measurement gap configurations with a measurement collision based on the priorities of the measurement gap configurations with a measurement collision, includes:

determining, based on a priority of the at least one set of fourth SMTC measurement configuration and priorities of the N-M sets of second measurement gap (MG) configurations, the K sets of measurement gap configurations as the N-M sets of second measurement gap configurations.

Among them, the manner of determining the priorities includes one of the following manners.

In manner 1, it is determined, based on a technique specification, that the priorities of the N-M sets of second measurement gap (MG) configurations are lower than the priority of the at least one set of fourth SMTC measurement configuration.

In manner 2, information used for indicating the priorities of the N-M sets of second measurement gap (MG) configurations and information used for indicating the priority of the at least one set of fourth SMTC measurement configuration sent by the network device are received.

Since the priority of the at least one set of fourth SMTC measurement configuration is higher than the priorities of the N-M sets of second measurement gap (MG) configurations, the K sets of measurement gap configurations are determined as the N-M sets of second measurement gap configurations.

The third type is that there is a collision in the second measurement gap (MG) configurations.

In this third type, there is further included two cases.

In a first case, the N-M sets of second measurement gap (MG) configurations include at least one set of aperiodic second measurement gap (MG) configuration and at least one set of periodic second measurement gap (MG) configuration, and there is a measurement collision between the at least one set of aperiodic second measurement gap (MG) configuration and the at least one set of periodic second measurement gap (MG) configuration.

Then, in step S303, determining the K sets of measurement gap configurations from the measurement gap configurations with a measurement collision based on the priorities of the measurement gap configurations with a measurement collision, includes:
determining the K sets of measurement gap configurations as the at least one set of periodic second measurement gap (MG) configuration;
or, determining, based on a priority of the at least one set of aperiodic second measurement gap (MG) configuration and a priority of the at least one set of periodic second measurement gap (MG) configuration, the K sets of measurement gap configurations as the at least one set of periodic second measurement gap (MG) configuration.

Among them, the manner of determining the priorities includes one of the following manners.

In manner 1, based on a technique specification, the priority of the at least one set of aperiodic second measurement gap (MG) configuration and the priority of the at least one set of periodic second measurement gap (MG) configuration are determined.

In manner 2, information used for indicating the priority of the at least one set of aperiodic second measurement gap (MG) configuration and information used for indicating the priority of the at least one set of periodic second measurement gap (MG) configuration sent by the network device are received.

In a second case, the N-M sets of second measurement gap (MG) configurations include at least two sets of periodic second measurement gap (MG) configurations, and there is a measurement collision between the at least two sets of periodic second measurement gap (MG) configurations.

In this case, a priority relationship between the at least two sets of periodic second measurement gap configurations needs to be determined, and the second measurement gap configurations with a lowest priority are determined as the K sets of measurement gap configurations.

Then, in step S303, determining the K sets of measurement gap configurations from the measurement gap configurations with a measurement collision based on the priorities of the measurement gap configurations with a measurement collision, includes:
determining, based on priorities of the at least two sets of periodic second measurement gap (MG) configurations, the K sets of measurement gap configurations as the second measurement gap (MG) configurations with a lowest priority.

Among them, the manner of determining the priorities includes one of the following manners.

In manner 1, based on a technique specification, the priorities of the at least two sets of periodic second measurement gap (MG) configurations are determined.

In manner 2, information used for indicating the priorities of the at least two sets of periodic second measurement gap (MG) configurations sent by the network device is received.

In step S304, the user equipment does not perform the measurement corresponding to the K sets of measurement gap configurations, or the user equipment performs the measurement after modifying the K sets of measurement gap configurations.

In some possible implementations, modifying the K sets of measurement gap configurations may refer to loosening the measurement requirements corresponding to the K sets of measurement gap configurations. For example, the measurement period in the K sets of measurement gap configurations is increased.

In some possible implementations, modifying the K sets of measurement gap configurations may also refer to tightening the measurement requirements corresponding to the K sets of measurement gap configurations. For example, a measurement period in the K sets of measurement gap configurations is reduced.

In some possible implementations, modifying the K sets of measurement gap configurations includes increasing a measurement period in the K sets of measurement gap configurations.

In the embodiments of the present disclosure, when the user equipment is configured with a plurality of sets of measurement configurations for different networks, and there is a measurement collision in the plurality of sets of measurement configurations, more than one measurement configuration is selected from the plurality of sets of measurement configurations with a measurement collision based on the priorities of the measurement configurations; and the measurement corresponding to the selected measurement configuration is not performed, or is performed after modification of the configuration, so that there is no collision in the measurement process.

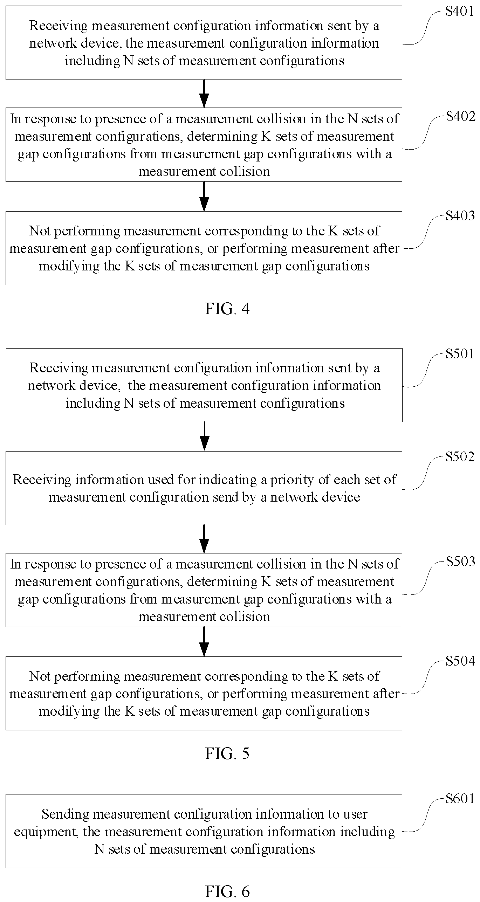

According to embodiments of the present disclosure, there is provided a measurement method, performed by user equipment. FIG. 4 is a flowchart of a measurement method according to an example embodiment. As shown in FIG. 4, the method includes steps S401 to S403.

In step S401, measurement configuration information sent by a network device is received, where the measurement configuration information includes N sets of measurement configurations.

The N sets of measurement configurations include M sets of first measurement configurations and N-M sets of second measurement gap (MG) configurations, the first measurement configuration is used for performing measurement on a first network, the second measurement gap (MG) configuration is used for performing measurement gap (MG)-based measurement on a second network, and the first network is a network to which the network device belongs. N and M are both integers greater than zero, and N is greater than M.

In step S402, in response to presence of a measurement collision in the N sets of measurement configurations, K sets of measurement gap configurations is determined from measurement gap configurations with a measurement collision.

In some possible implementations, the measurement collision refers to that the user equipment can only perform one measurement in the overlapping area of the measurement windows in different measurement configurations. Specifically, since the frequency point corresponding to the measurement gap (MG) configuration and the frequency point corresponding to the SMTC are different from each other, the measurement collision in the plurality of measurement configurations may include a measurement collision between the measurement gap (MG) configuration and the SMTC, and the user equipment can only perform measurement under one type of MG configuration at the same moment. The measurement collision in the plurality of measurement configurations may also include a collision between different measurement gap (MG) configurations.

In some possible implementations, in view of the general situation that it is considered that the first network is the primary network and the second network is the secondary network, the K sets of measurement gap configurations are determined as second measurement gap (MG) configurations for the second network included in the measurement gap configurations with a measurement collision. That is, when there is a measurement collision, the measurement configuration for the second network is discarded or modified.

In some possible implementations, in some use scenarios, it may be considered that the importance of the second network is higher than the importance of the first network, thus the K sets of measurement gap configurations are determined as all or part of the first measurement configurations for the first network included in the measurement gap configurations with a measurement collision. That is, when there is a measurement collision, the measurement configuration for the first network is discarded or modified.

In some possible implementations, priorities of different configurations are not determined by using a network as a granularity, and different configurations for different networks may correspond to different priorities. For example, the priorities of partial first measurement configurations in the M sets of first measurement configurations are higher than the priorities of partial second measurement gap (MG) configurations in the N-M sets of second measurement gap (MG) configurations. Meanwhile, the priorities of partial first measurement configurations in the M sets of first measurement configurations are lower than the priorities of partial second measurement gap (MG) configurations in the N-M sets of second measurement gap (MG) configurations. In this case, K sets of measurement gap configurations are determined according to priorities of different configurations. That is, when there is a measurement collision, a measurement configuration with a low priority is discarded or modified.

In step S403, the measurement corresponding to the K sets of measurement gap configurations is not performed, or the measurement is performed after modifying the K sets of measurement gap configurations.

In some possible implementations, modifying the K sets of measurement gap configurations may refer to loosening the measurement requirements corresponding to the K sets of measurement gap configurations. For example, the measurement period in the K sets of measurement gap configurations is increased.

In some possible implementations, modifying the K sets of measurement gap configurations may also refer to tightening the measurement requirements corresponding to the K sets of measurement gap configurations. For example, the measurement period in the K sets of measurement gap configurations is reduced.

In the embodiments of the present disclosure, when the user equipment is configured with a plurality of sets of measurement configurations for different networks, and there is a measurement collision in the plurality of sets of measurement configurations, measurement corresponding to the partial measurement configurations in the measurement configurations with a measurement collision is not performed, or is performed after modification of the configurations, so that there is no collision in the measurement process.

According to embodiments of the present disclosure, there is provided a measurement method, performed by user equipment. FIG. 5 is a flowchart of a measurement method according to an example embodiment. As shown in FIG. 5, the method includes steps S501 to S504.

In step S501, measurement configuration information sent by a network device is received, where the measurement configuration information includes N sets of measurement configurations.

The N sets of measurement configurations include M sets of first measurement configurations and N-M sets of second measurement gap (MG) configurations, the first measurement configuration is used for performing measurement on a first network, the second measurement gap (MG) configuration is used for performing measurement gap (MG)-based measurement on a second network, and the first network is a network to which the network device belongs. N and M are both integers greater than zero, and N is greater than M.

In step S502, information used for indicating a priority of each set of measurement configuration sent by a network device is received.

In step S503, in response to presence of a measurement collision in the N sets of measurement configurations, K sets of measurement gap configurations are determined from measurement gap configurations with a measurement collision based on priorities of the measurement gap configurations with a measurement collision, where priorities of the K sets of measurement gap configurations are lower than priorities of other measurement gap configurations other than the K sets of measurement gap configurations in the measurement gap configurations with a measurement collision.

K is an integer greater than zero, and N is greater than K.

The description is made in detail below based on three different collision types.

The first type:
There is a collision between the second measurement gap (MG) configuration and the measurement gap (MG) configuration in the first measurement configuration.

In an example, the M sets of first measurement configurations include at least one set of third measurement gap (MG) configuration, the third measurement gap (MG) configuration is a legacy measurement gap configuration, and there is a measurement collision between the N-M sets of second measurement gap (MG) configurations and the at least one set of third measurement gap (MG) configuration.

In this case, a relationship between priorities of the N-M sets of second measurement gap (MG) configurations and a priority of the at least one set of third measurement gap (MG) configuration needs to be determined, and the measurement gap configurations with a low priority are determined as the K sets of measurement gap configurations.

Then, in step S503, determining the K sets of measurement gap configurations from measurement gap configurations with a measurement collision based on the priorities of the measurement gap configurations with a measurement collision, includes:
determining, based on priorities of the N-M sets of second measurement gap (MG) configurations and a priority of the at least one set of third measurement gap (MG) configuration, the K sets of measurement gap configurations as the N-M sets of second measurement gap configurations.

Among them, the manner of determining the priorities includes one of the following manners.

In manner 1, it is determined, based on a technique specification, that the priorities of the N-M sets of second measurement gap (MG) configurations are lower than the priority of the at least one set of third measurement gap (MG) configuration.

In manner 2, information used for indicating the priorities of the N-M sets of second measurement gap (MG) configurations and information used for indicating the priority of the at least one set of third measurement gap (MG) configuration sent by the network device are received.

Since the priorities of the N-M sets of second measurement gap (MG) configurations are lower than the priority of the at least one set of third measurement gap (MG) configuration, the K sets of measurement gap configurations are determined as the N-M sets of second measurement gap configurations.

The second type is that there is a collision between the second measurement gap (MG) configuration and the SMTC configuration in the first measurement configuration.

In an example, the M sets of first measurement configurations include at least one set of fourth SMTC measurement configuration, and there is a measurement collision between the at least one set of fourth SMTC measurement configuration and the N-M sets of second measurement gap (MG) configurations.

In this case, a relationship between a priority of the at least one set of fourth SMTC measurement configuration and priorities of the N-M sets of second measurement gap (MG) configurations needs to be determined, and measurement gap configurations with a low priority are determined as the K sets of measurement gap configurations.

Then, in step S503, determining the K sets of measurement gap configurations from the measurement gap configurations with a measurement collision based on the priorities of the measurement gap configurations with a measurement collision, includes:
determining, based on a priority of the at least one set of fourth SMTC measurement configuration and priorities of the N-M sets of second measurement gap (MG) configurations, the K sets of measurement gap configurations as the N-M sets of second measurement gap configurations.

Among them, the manner of determining the priorities includes one of the following manners.

In manner 1, it is determined, based on a technique specification, that the priorities of the N-M sets of second measurement gap (MG) configurations are lower than the priority of the at least one set of fourth SMTC measurement configuration.

In manner 2, information used for indicating the priorities of the N-M sets of second measurement gap (MG) configurations and information used for indicating the priority of the at least one set of fourth SMTC measurement configuration sent by the network device are received.

Since the priority of the at least one set of fourth SMTC measurement configuration is higher than the priorities of the N-M sets of second measurement gap (MG) configurations, the K sets of measurement gap configurations are determined as the N-M sets of second measurement gap configurations.

The third type is that there is a collision in the second measurement gap (MG) configurations.

In this third type, there is further included two cases.

In a first case, the N-M sets of second measurement gap (MG) configurations include at least one set of aperiodic second measurement gap (MG) configuration and at least one set of periodic second measurement gap (MG) configuration, and there is a measurement collision between the at least one set of aperiodic second measurement gap (MG) configuration and the at least one set of periodic second measurement gap (MG) configuration.

Then, in step S503, determining the K sets of measurement gap configurations from the measurement gap configurations with a measurement collision based on the priorities of the measurement gap configurations with a measurement collision, includes:
determining the K sets of measurement gap configurations as the at least one set of periodic second measurement gap (MG) configuration;
or, determining, based on a priority of the at least one set of aperiodic second measurement gap (MG) configuration and a priority of the at least one set of periodic second measurement gap (MG) configuration, the K sets of measurement gap configurations as the at least one set of periodic second measurement gap (MG) configuration.

Among them, the manner of determining the priorities includes one of the following manners.

In manner 1, based on a technique specification, the priority of the at least one set of aperiodic second measurement gap (MG) configuration and the priority of the at least one set of periodic second measurement gap (MG) configuration are determined.

In manner 2, information used for indicating the priority of the at least one set of aperiodic second measurement gap (MG) configuration and information used for indicating the priority of the at least one set of periodic second measurement gap (MG) configuration sent by the network device are received.

In a second case, the N-M sets of second measurement gap (MG) configurations include at least two sets of periodic second measurement gap (MG) configurations, and there is a measurement collision between the at least two sets of periodic second measurement gap (MG) configurations.

In this case, a priority relationship between the at least two sets of periodic second measurement gap configurations needs to be determined, and the second measurement gap configurations with a lowest priority are determined as the K sets of measurement gap configurations.

Then, in step S503, determining the K sets of measurement gap configurations from the measurement gap configurations with a measurement collision based on the priorities of the measurement gap configurations with a measurement collision, includes:
determining, based on priorities of the at least two sets of periodic second measurement gap (MG) configurations, the K sets of measurement gap configurations as the second measurement gap (MG) configurations with a lowest priority.

Among them, the manner of determining the priorities includes one of the following manners.

In manner 1, based on a technique specification, the priorities of the at least two sets of periodic second measurement gap (MG) configurations are determined.

In manner 2, information used for indicating the priorities of the at least two sets of periodic second measurement gap (MG) configurations sent by the network device is received.

In step S504, the measurement corresponding to the K sets of measurement gap configurations is not performed, or the measurement is performed after modifying the K sets of measurement gap configurations.

In some possible implementations, modifying the K sets of measurement gap configurations may refer to loosening the measurement requirements corresponding to the K sets of measurement gap configurations. For example, the measurement period in the K sets of measurement gap configurations is increased.

In some possible implementations, modifying the K sets of measurement gap configurations may also refer to tightening the measurement requirements corresponding to the K sets of measurement gap configurations. For example, a measurement period in the K sets of measurement gap configurations is reduced.

According to embodiments of the present disclosure, there is provided a measurement method, performed by a network device. FIG. 6 is a flowchart of a measurement method according to an example embodiment. As shown in FIG. 6, the method includes step S601.

In step S601, measurement configuration information is sent to user equipment, where the measurement configuration information includes N sets of measurement configurations.

The N sets of measurement configurations include M sets of first measurement configurations and N-M sets of second measurement gap (MG) configurations, the first measurement configuration is used for performing measurement on a first network, the second measurement gap (MG) configuration is used for performing measurement gap (MG)-based measurement on a second network, and the first network is a network to which the network device belongs. N and M are both integers greater than zero, and N is greater than M.

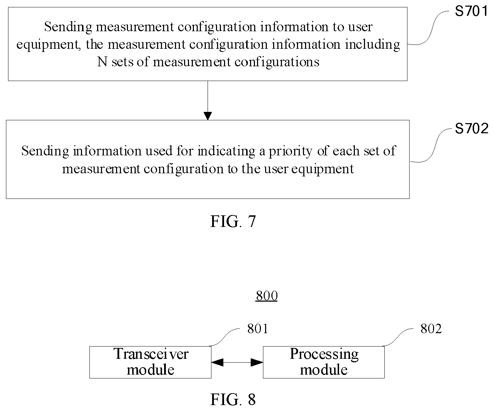

According to embodiments of the present disclosure, there is provided a measurement method, performed by a network device. FIG. 7 is a flowchart of a measurement method according to an example embodiment. As shown in FIG. 7, the method includes steps S701 to S702.

In step S701, measurement configuration information is sent to user equipment, where the measurement configuration information includes N sets of measurement configurations.

The N sets of measurement configurations include M sets of first measurement configurations and N-M sets of second measurement gap (MG) configurations, the first measurement configuration is used for performing measurement on a first network, the second measurement gap (MG) configuration is used for performing measurement gap (MG)-based measurement on a second network, and the first network is a network to which the network device belongs.

In step S702, information used for indicating a priority of each set of measurement configuration is sent to the user equipment.

Therefore, the user equipment determines the priority of each set of measurement configuration according to the information of the priority of each set of measurement configuration, thus determining the measurement configuration with a low priority.

Based on the same concept as the foregoing method embodiments, there is further provided a communication apparatus according to embodiments of the present disclosure. The communication apparatus may have the functions of the user equipment 102 in the foregoing method embodiments, and is configured to perform the steps performed by the user equipment 102 provided in the foregoing embodiments. The function may be implemented by hardware, or may be implemented by software or hardware executing corresponding software. The hardware or the software includes one or more modules corresponding to the foregoing function.

In a possible implementation, the communication apparatus 800 as shown in FIG. 8 may be used as the user equipment 102 involved in the foregoing method embodiments, and perform the steps performed by the user equipment 102 in the foregoing method embodiments.

The communication apparatus 800 includes a transceiver module 801 and a processing module 802.

The transceiver module 801 is configured to receive measurement configuration information sent by a network device, where the measurement configuration information includes N sets of measurement configurations. The N sets of measurement configurations include M sets of first measurement configurations and N-M sets of second measurement gap (MG) configurations, the first measurement configuration is used for performing measurement on a first network, the second measurement gap (MG) configuration is used for performing measurement gap (MG)-based measurement on a second network, and the first network is a network to which the network device belongs.

The processing module 802 is configured to determine, in response to presence of a measurement collision in the N sets of measurement configurations, K sets of measurement gap configurations from measurement gap configurations with a measurement collision, where N, K, and M are all integers greater than zero, N is greater than M, and N is greater than K. The processing module 802 is further configured to not perform measurement corresponding to the K sets of measurement gap configurations, or perform the measurement after modifying the K sets of measurement gap configurations.

In some possible implementations, the processing module 802 is further configured to:
determine K sets of measurement gap configurations from measurement gap configurations with a measurement collision based on priorities of the measurement gap configurations with a measurement collision, where priorities of the K sets of measurement gap configurations are lower than priorities of other measurement gap configurations other than the K sets of measurement gap configurations in the measurement gap configurations with a measurement collision.

In some possible implementations, the M sets of first measurement configurations include at least one set of third measurement gap (MG) configuration, the third measurement gap (MG) configuration is a legacy measurement gap configuration, and there is a measurement collision between the N-M sets of second measurement gap (MG) configurations and the at least one set of third measurement gap (MG) configuration.

The processing module 802 is further configured to:
determine, based on priorities of the N-M sets of second measurement gap (MG) configurations and a priority of the at least one set of third measurement gap (MG) configuration, the K sets of measurement gap configurations as the N-M sets of second measurement gap configurations.

In some possible implementations, the processing module 802 is further configured to:
determine, based on a technique specification, that the priorities of the N-M sets of second measurement gap (MG) configurations are lower than the priority of the at least one set of third measurement gap (MG) configuration;
   or,
receive information used for indicating the priorities of the N-M sets of second measurement gap (MG) configurations and information used for indicating the priority of the at least one set of third measurement gap (MG) configuration sent by the network device.

In some possible implementations, the M sets of first measurement configurations include at least one set of fourth SMTC measurement configuration, and there is a measurement collision between the at least one set of fourth SMTC measurement configuration and the N-M sets of second measurement gap (MG) configurations.

The processing module 802 is further configured to:
determine, based on a priority of the at least one set of fourth SMTC measurement configurations and priorities of the N-M sets of second measurement gap (MG) configurations, the K sets of measurement gap configurations as the N-M sets of second measurement gap configurations.

In some possible implementations, the processing module 802 is further configured to:
determine, based on a technique specification, that he priorities of the N-M sets of second measurement gap (MG) configurations are lower than the priority of at least one set of fourth SMTC measurement configuration,
   or,
receive information used for indicating the priorities of the N-M sets of second measurement gap (MG) configurations and information used for indicating the priority of the at least one set of fourth SMTC measurement configuration sent by the network device.

In some possible implementations, the N-M sets of second measurement gap (MG) configurations include at least one set of aperiodic second measurement gap (MG) configuration and at least one set of periodic second measurement gap (MG) configuration, and there is a measurement collision between the at least one set of aperiodic second measurement gap (MG) configuration and the at least one set of periodic second measurement gap (MG) configuration.

In some possible implementations, the processing module 802 is further configured to:
determine the K sets of measurement gap configurations as the at least one set of periodic second measurement gap (MG) configuration.

In some possible implementations, the processing module 802 is further configured to:
determine, based on a priority of the at least one set of aperiodic second measurement gap (MG) configuration and a priority of the at least one set of periodic second measurement gap (MG) configuration, the K sets of measurement gap configurations as the at least one set of periodic second measurement gap (MG) configuration.

In some possible implementations, the processing module 802 is further configured to:
determine priorities of at least two sets of periodic second measurement gap (MG) configurations based on a technique specification;
   or,
receive information used for indicating the priorities of the at least two sets of periodic second measurement gap (MG) configurations sent by the network device.

In some possible implementations, the N-M sets of second measurement gap (MG) configurations include at least two sets of periodic second measurement gap (MG) configurations, and there is a measurement collision between the at least two sets of periodic second measurement gap (MG) configurations.

The processing module 802 is further configured to:
determine, based on priorities of the at least two sets of periodic second measurement gap (MG) configurations, the K sets of measurement gap configurations as the second measurement gap (MG) configurations with a lowest priority.

In some possible implementations, the processing module 802 is further configured to:
determine priorities of at least two sets of periodic second measurement gap (MG) configurations based on a technique specification;
   or,
receive information used for indicating the priorities of the at least two sets of periodic second measurement gap (MG) configurations sent by the network device.

In some possible implementations, the processing module 802 is further configured to increase a measurement period in the K sets of measurement gap configurations.

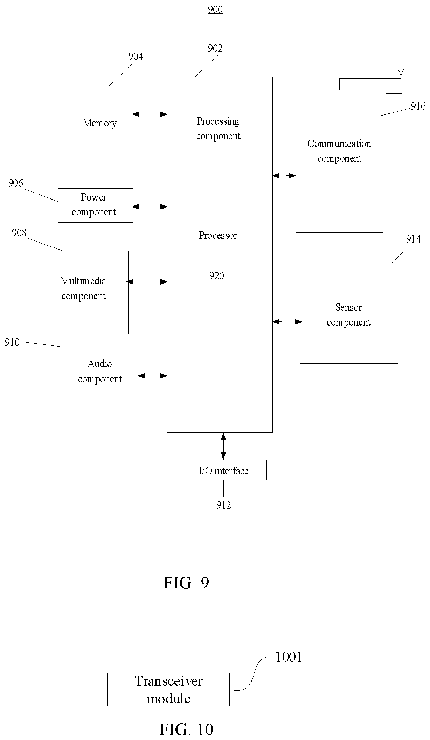

When the communication apparatus is the user equipment 102, the structure of the communication apparatus may also be that as shown in FIG. 9.

FIG. 9 is a block diagram of a measurement apparatus 900 according to an example embodiment. For example, the apparatus 900 may be a mobile phone, a computer, a digital broadcast terminal, a message transceiver device, a game console, a tablet device, a medical device, an exercise device, a personal digital assistant, or the like.

Referring to FIG. 9, the apparatus 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the apparatus 900, such as operations associated with display, telephone calls, data communications, camera operations, and recording operations. The processing component 902 may include one or more processors 920 to execute instructions to perform all or part of the steps of the above methods. Moreover, the processing component 902 may include one or more modules which facilitate the interaction between the processing component 902 and other components. For example, the processing component 902 may include a multimedia module to facilitate interaction between the multimedia component 908 and the processing component 902.

The memory 904 is configured to store various types of data to support the operation of the apparatus 900. Examples of such data include instructions for any application or method operating on the apparatus 900, contact data, phonebook data, messages, pictures, videos, etc. The memory 904 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 906 provides power to various components of the apparatus 900. The power component 906 may include a power management system, one or more power sources, and other components associated with generation, management, and distribution of power for the apparatus 900.

The multimedia component 908 includes a screen providing an output interface between the apparatus 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slides, and gestures on the touch panel. The touch sensor may not only sense a boundary of a touch or slide action, but also detect a duration and pressure associated with the touch or slide action. In some embodiments, the multimedia component 908 includes a front camera and/or a rear camera. The front camera and/or the rear camera may receive external multimedia data when the apparatus 900 is in an operation mode, such as a photographing mode or a video mode. Each of the front camera and the rear camera may be a fixed optical lens system or have focal length and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, and a speech recognition mode. The received audio signal may be further stored in the memory 904 or transmitted via the communication component 916. In some embodiments, the audio component 910 further includes a speaker to output audio signals.

The I/O interface 912 provides an interface between the processing component 902 and the peripheral interface module, and the peripheral interface module may be a keyboard, a click wheel, a button, or the like. The button may include, but is not limited to, a home button, a volume button, a starting button, and a locking button.

The sensor component 914 includes one or more sensors to provide status assessments of various aspects of the apparatus 900. For example, the sensor component 914 may detect the on/off state of the apparatus 900, and the relative positioning of the components, such as the display and keypad of the apparatus 900. The sensor component 914 may also detect the position change of one component of the apparatus 900 or the apparatus 900, the presence or absence of contact by the user with the apparatus 900, the orientation or acceleration/deceleration of the apparatus 900, and the temperature change of the apparatus 900. The sensor component 914 may include a proximity sensor configured to detect the presence of nearby objects without any physical contact. The sensor component 914 may also include an optical sensor, such as a CMOS or CCD image sensor, for use in imaging applications. In some embodiments, the sensor component 914 may further include an acceleration sensor, a gyroscope sensor, a magnetic sensor, a pressure sensor, or a temperature sensor.

The communication component 916 is configured to facilitate wired or wireless communication between the apparatus 900 and other devices. The apparatus 900 may access a wireless network based on a communication standard, such as WiFi, 4G, or 5G, or a combination of them. In an example embodiment, the communication component 916 receives a broadcast signal or broadcast related information from an external broadcast management system via a broadcast channel. In an example embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the apparatus 900 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the methods described above.

According to example embodiments, there is further provided a non-transitory computer-readable storage medium including an instruction, for example, a memory 904 including an instruction. The instruction may be executed by the processor 920 of the apparatus 900 to complete the foregoing methods. For example, the non-transitory computer-readable storage medium may be a ROM, a random access memory (RAM), a CD-ROM, a magnetic tape, a floppy disk, an optical data storage device, or the like.

Based on the same concept as the foregoing method embodiments, there is further provided a communication apparatus according to embodiments of the present disclosure. The communication apparatus may have functions of the network device 101 in the foregoing method embodiments, and is configured to perform the steps performed by the network device 101 provided in the foregoing embodiments. The function may be implemented by hardware, or may be implemented by software or hardware executing corresponding software. The hardware or the software includes one or more modules corresponding to the foregoing functions.

In a possible implementation, the communication apparatus 1000 as shown in FIG. 10 may be used as the network device 101 in the foregoing method embodiments, and perform the steps performed by the network device 101 in the foregoing method embodiments.

The communication apparatus 1000 shown in FIG. 10 includes a transceiver module 1001.

The transceiver module 1001 is configured to send measurement configuration information to user equipment, where the measurement configuration information includes N sets of measurement configurations. The N sets of measurement configurations include M sets of first measurement configurations and N-M sets of second measurement gap (MG) configurations, the first measurement configuration is used for performing measurement on a first network, the second measurement gap (MG) configuration is used for performing measurement gap (MG)-based measurement on a second network, and the first network is a network to which the network device belongs.

In some possible implementations, the transceiver module 1001 is further configured to:
send information used for indicating a priority of each set of measurement configuration to the user equipment.

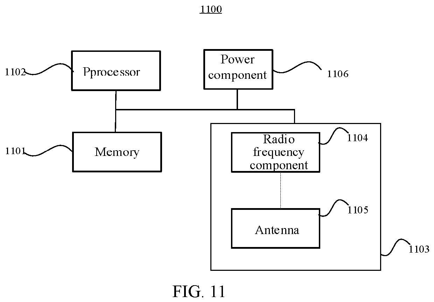

When the communication apparatus is a network device, the structure of the communication apparatus may be further as shown in FIG. 11. The structure of the communication apparatus is described by taking that the network device 101 is a base station as an example. As shown in FIG. 11, the apparatus 1100 includes a memory 1101, a processor 1102, a transceiver component 1103, and a power component 1106. Among them, the memory 1101 is coupled to the processor 1102, and may be configured to store a program and data necessary for implementing each function by the communication apparatus 1100. The processor 1102 is configured to support the communication apparatus 1100 in performing corresponding functions in the foregoing methods, and such function may be implemented by invoking a program stored in the memory 1101. The transceiver component 1103 may be a wireless transceiver, and may be configured to support the communication apparatus 1100 in receiving signaling and/or data through a wireless air interface, and to send signaling and/or data. The transceiver component 1103 may also be referred to as a transceiver unit or a communication unit, and the transceiver component 1103 may include a radio frequency component 1104 and one or more antennas 1105. Among them, the radio frequency component 1104 may be a remote radio unit (RRU), and may be specifically used for transmission of radio frequency signals and conversion between a radio frequency signal and a baseband signal. The one or more antennas 1105 may be specifically configured to radiate and receive radio frequency signals.

When the communication apparatus 1100 needs to send data, the processor 1102 may perform baseband processing on the data to be sent, and output a baseband signal to the radio frequency unit; and the radio frequency unit performs radio frequency processing on the baseband signal and then sends the radio frequency signal in the form of an electromagnetic wave through the antenna. When data is sent to the communication apparatus 1100, the radio frequency unit receives the radio frequency signal through the antenna, converts the radio frequency signal into a baseband signal, and outputs the baseband signal to the processor 1102; and the processor 1102 converts the baseband signal into data, and performs processing on the data.

Other implementations of the embodiments of the present disclosure will be apparent to those skilled in the art from consideration of the description and practice of the invention disclosed here. The present application is intended to cover any variations, uses, or adaptations of the present disclosure following the general principles of the present disclosure and including common general knowledge and conventional technical means in the art that are not disclosed in the present disclosure. It is intended that the description and embodiments may be considered as examples only, with a true scope and spirit of the embodiments of the present disclosure being indicated by the following claims.

It should be understood that the embodiments of the present disclosure are not limited to the precise structures that have been described above and shown in the accompanying drawings, and various modifications and changes may be made without departing from the scope of the present disclosure. The scope of the embodiments of the present disclosure is limited only by the appended claims.

### Industrial Applicability

When the user equipment is configured with a plurality of sets of measurement configurations for different networks, and there is a measurement collision in the plurality of sets of measurement configurations, measurement corresponding to the partial measurement configurations in the measurement configurations with a measurement collision is not performed, or is performed after modification of the measurement configurations, so that there is no collision in the measurement process.

## Claims

1. A measurement method, performed by user equipment, and comprising:
receiving measurement configuration information sent by a network device, wherein the measurement configuration information comprises N sets of measurement configurations, the N sets of measurement configurations comprise M sets of first measurement configurations and N-M sets of second measurement gap, MG, configurations, the first measurement configurations are used for performing measurement on a first network, the second measurement gap, MG, configurations are used for performing measurement gap, MG-based measurement on a second network, and the first network is a network to which the network device belongs;
determining, in response to presence of a measurement collision in the N sets of measurement configurations, K sets of measurement gap configurations from measurement gap configurations with a measurement collision, wherein N, K, and M are all integers greater than zero, N is greater than M, and N is greater than K; and
not performing measurement corresponding to the K sets of measurement gap configurations, or performing measurement after modifying the K sets of measurement gap configurations.

2. The method according to claim 1, wherein determining the K sets of measurement gap configurations from the measurement gap configurations with the measurement collision, comprises:
determining the K sets of measurement gap configurations as second measurement gap, MG, configurations for the second network comprised in the measurement gap configurations with the measurement collision.

3. The method according to claim 1, wherein determining the K sets of measurement gap configurations from the measurement gap configurations with the measurement collision, comprises:
determining, based on priorities of the measurement gap configurations with the measurement collision, the K sets of measurement gap configurations from the measurement gap configurations with the measurement collision, wherein priorities of the K sets of measurement gap configurations are lower than priorities of other measurement gap configurations other than the K sets of measurement gap configurations in the measurement gap configurations with the measurement collision.

4. The method according to claim 3, wherein,
the M sets of first measurement configurations comprise at least one set of third measurement gap, MG, configuration, the third measurement gap, MG, configuration is a legacy measurement gap configuration, and a measurement collision is present between the N-M sets of second measurement gap, MG, configurations and the at least one set of third measurement gap, MG, configuration; and
determining, based on the priorities of the measurement gap configurations with the measurement collision, the K sets of measurement gap configurations from the measurement gap configurations with the measurement collision, comprises:
determining, based on priorities of the N-M sets of second measurement gap, MG, configurations and a priority of the at least one set of third measurement gap, MG, configuration, the K sets of measurement gap configurations as the N-M sets of second measurement gap configurations.

5. The method according to claim 4, further comprising:
determining, based on a technique specification, that the priorities of the N-M sets of second measurement gap, MG, configurations are lower than the priority of the at least one set of third measurement gap, MG, configuration;
or,
receiving information used for indicating the priorities of the N-M sets of second measurement gap, MG, configurations and information used for indicating the priority of the at least one set of third measurement gap, MG, configuration sent by the network device.

6. The method according to claim 3, wherein,
the M sets of first measurement configurations comprise at least one set of fourth SMTC measurement configuration, and a measurement collision is present between the at least one set of fourth SMTC measurement configuration and the N-M sets of second measurement gap, MG, configurations; and
determining, based on the priorities of the measurement gap configurations with the measurement collision, the K sets of measurement gap configurations from the measurement gap configurations with the measurement collision, comprises:
determining, based on a priority of the at least one set of fourth SMTC measurement configuration and priorities of the N-M sets of second measurement gap, MG, configurations, the K sets of measurement gap configurations as the N-M sets of second measurement gap configurations.

7. The method according to claim 6, further comprising:
determining, based on a technique specification, that the priorities of the N-M sets of second measurement gap, MG, configurations are lower than the priority of the at least one set of fourth SMTC measurement configuration;
or,
receiving information used for indicating the priorities of the N-M sets of second measurement gap, MG, configurations and information used for indicating the priority of the at least one set of fourth SMTC measurement configuration sent by the network device.

8. The measurement method according to claim 1, wherein,
the N-M sets of second measurement gap, MG, configurations comprise at least one set of aperiodic second measurement gap, MG, configuration and at least one set of periodic second measurement gap, MG, configuration, and a measurement collision is present between the at least one set of aperiodic second measurement gap, MG, configuration and the at least one set of periodic second measurement gap, MG, configuration.

9. The measurement method according to claim 8, wherein,
determining the K sets of measurement gap configurations from the measurement gap configurations with the measurement collision, comprises:
determining the K sets of measurement gap configurations as the at least one set of periodic second measurement gap, MG, configuration.

10. The measurement method according to claim 8, wherein,
determining the K sets of measurement gap configurations from the measurement gap configurations with the measurement collision, comprises:
determining, based on a priority of the at least one set of aperiodic second measurement gap, MG, configuration and a priority of the at least one set of periodic second measurement gap, MG, configuration, the K sets of measurement gap configurations as the at least one set of periodic second measurement gap, MG, configuration.

11. The measurement method according to claim 10, further comprising:
determining, based on a technique specification, the priority of the at least one set of aperiodic second measurement gap, MG, configuration and the priority of the at least one set of periodic second measurement gap, MG, configuration;
or,
receiving information used for indicating the priority of the at least one set of aperiodic second measurement gap, MG, configuration and information used for indicating the priority of the at least one set of periodic second measurement gap, MG, configuration sent by the network device.

12. The measurement method according to claim 3, wherein,
the N-M sets of second measurement gap, MG, configurations comprise at least two sets of periodic second measurement gap, MG, configurations, and a measurement collision is present between the at least two sets of periodic second measurement gap, MG, configurations; and
determining, based on the priorities of the measurement gap configurations with the measurement collision, the K sets of measurement gap configurations from the measurement gap configurations with the measurement collision, comprises:
determining, based on priorities of the at least two sets of periodic second measurement gap, MG, configurations, the K sets of measurement gap configurations as second measurement gap, MG, configurations with a lowest priority.

13. The method according to claim 12, further comprising:
determining, based on a technique specification, the priorities of the at least two sets of periodic second measurement gap, MG, configurations;
or,
receiving information used for indicating the priorities of the at least two sets of periodic second measurement gap, MG, configurations sent by the network device.

14. The method according to claim 1, wherein modifying the K sets of measurement gap configurations comprises increasing a measurement period in the K sets of measurement gap configurations.

15. A measurement method, performed by a network device, and comprising:
sending measurement configuration information to user equipment, wherein the measurement configuration information comprises N sets of measurement configurations, the N sets of measurement configurations comprise M sets of first measurement configurations and N-M sets of second measurement gap, MG, configurations, the first measurement configurations are used for performing measurement on a first network, the second measurement gap, MG, configurations are used for performing measurement gap, MG-based measurement on a second network, and the first network is a network to which the network device belongs.

16. The method according to claim 15, further comprising:
sending information used for indicating a priority of each set of measurement configuration to the user equipment.

17. A measurement apparatus, configured in user equipment, and comprising:
a transceiver module, configured to receive measurement configuration information sent by a network device, wherein the measurement configuration information comprises N sets of measurement configurations, the N sets of measurement configurations comprise M sets of first measurement configurations and N-M sets of second measurement gap, MG, configurations, the first measurement configurations are used for performing measurement on a first network, the second measurement gap, MG, configurations are used for performing measurement gap, MG-based measurement on a second network, and the first network is a network to which the network device belongs; and
a processing module, configured to, in response to presence of a measurement collision in the N sets of measurement configurations, determine K sets of measurement gap configurations from measurement gap configurations with a measurement collision, wherein N, K, and M are all integers greater than zero, N is greater than M, N is greater than K, and the processing module is further configured to not perform measurement corresponding to the K sets of measurement gap configurations, or perform measurement after modifying the K sets of measurement gap configurations.

18. A measurement apparatus, configured in a network device, and comprising:
a transceiver module, configured to send measurement configuration information to user equipment, wherein the measurement configuration information comprises N sets of measurement configurations, the N sets of measurement configurations comprise M sets of first measurement configurations and N-M sets of second measurement gap, MG, configurations, the first measurement configurations are used for performing measurement on a first network, the second measurement gap, MG, configurations are used for performing measurement gap, MG-based measurement on a second network, and the first network is a network to which the network device belongs.

19. An electronic device, comprising a processor and a memory, wherein,
the memory is configured to store a computer program; and
the processor is configured to execute the computer program to implement the method according to any one of claims 1 to 14.

20. A communication device, comprising a processor and a memory, wherein,
the memory is configured to store a computer program; and
the processor is configured to execute the computer program to implement the method according to any one of claims 15 and 16.

21. A computer-readable storage medium, wherein an instruction is stored in the computer-readable storage medium, and when the instruction is invoked and executed on a computer, the computer is caused to perform the method according to any one of claims 1 to 14.

22. A computer-readable storage medium, wherein an instruction is stored in the computer-readable storage medium, and when the instruction is invoked and executed on a computer, the computer is caused to perform the method according to any one of claims 15 and 16.
